# EUROPEAN PATENT APPLICATION

(11) **EP 2 023 264 A1**
(43) Date of publication of application: **11.02.2009**
(21) Application number: 08161138.6
(22) Date of filing: 25.07.2008
(51) Int. Cl.: G06K 1/12, G06K 19/06

(54) **Method for encoding and decoding information in the form of symbols, encoded symbols and method for impressing them on physical supports**

(30) Priority: 26.07.2007 IT FI20070175
(71) Applicant: Spin S.r.l., 50026 San Casciano Val di Pesa (IT)
(72) Inventor: Tosti, Michele, 50026 San Casciano Val di Pesa (IT); Niccolai, Filippo, 50127 Firenze (IT)
(74) Representative: Gervasi, Gemma

(57) **Abstract**

The present invention concerns a new method for encoding information in the form of symbols represented by means of colours or shades of grey, so as to produce a unique correspondence not only with the arrangement and the thickness of the basic elements such as dots and lines, but also with the colour or shade of grey which they assume. A method for impressing said symbols on physical supports, in particular on supports made of metallic material, is also described.

## Description

### Field of the invention

The present invention relates to a method for encoding and decoding information in the form of symbols, encoded symbols and a method for impressing them on physical supports.

### State of the art

The prior art discloses different types of coded labels used for various purposes including the cataloguing and identification of commercial products and all the information relating to them.

An example of a coded label is typically one which has a bar code.

A bar code symbol consists of a sequence of bars and spaces which contains information, and control elements.

The types of coding used in bar codes are characterized by :
- Relationship between thickness of the wide elements and thickness of the narrow elements.
- Thickness of the narrow element.
- Sequences of bars and spaces for encoding the representable characters.
- Representable characters. All the codes may represent decimal figures.
Some of them may also encode letters of the alphabet and/or special characters.
- Number of characters representable with a label. Some codes represent a fixed number of characters.
- Sequences of bars and spaces for encoding the start/stop characters.
- Tolerances for the individual elements.
- Control digits.

Several types of bar codes are available which are able to contain different amounts of information and which may be roughly grouped together as follows:
- Codes with two thicknesses
   The elements in the code (bars and spaces) may have only two thicknesses, in a ratio comprised between 2:1 and 3:1.
- Codes with more than two thicknesses
   The elements in the code may have more than two different thicknesses. In general this requires a better printing quality.
- 2-dimensional codes:
   The elements in the code may have more than one dimension.

The reading of the bar code is performed by means of special scanners available in various types (laser technology, CCD technology, etc.); these devices are generally able to convert a sequence of bars and spaces into a corresponding electric signal which can be subsequently decoded.

The possibility of introducing information onto these labels depends on the thickness and the positioning of the abovementioned dark elements - also called segments, rows, bars or bands - with respect to the white spaces. In other words, the information contained therein depends on the relationship between black and white in the bar code.

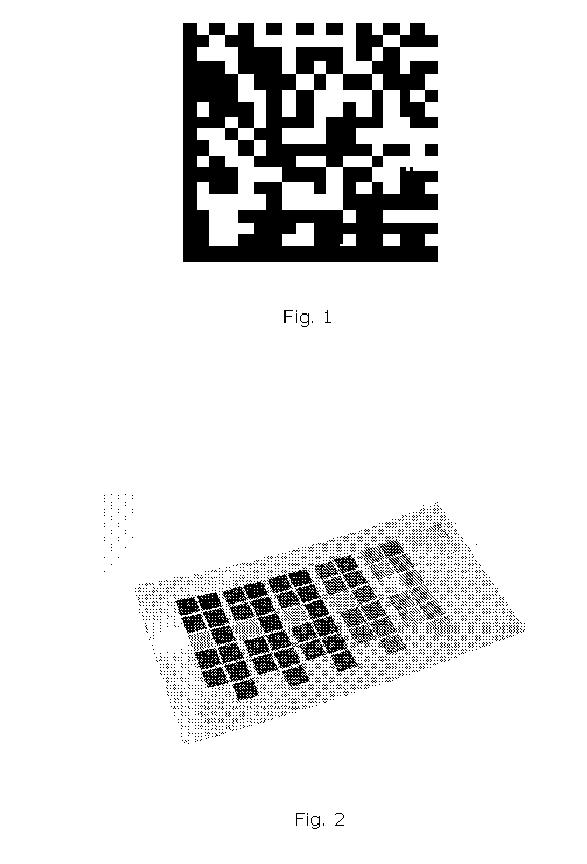

With reference to Fig. 1, in order to increase the amount of information contained in coded labels, for the same surface area and reading/writing resolution thereof, labels with two-dimensional coding systems have been introduced in the prior art, these coding systems including what are commonly called "Data Matrix codes" distinguished by the fact that the information is represented by dots arranged in the form of two-dimensional matrices instead of rows arranged alongside each other as with bar codes. Data Matrix coding has recently been approved as ISO/IEC standard 16022:2006.

It is evident that the information which can be represented by a matrix with dimensions consisting of m x n black dots on a white background (or vice versa) is equal to 2^(*m* x *n*), so that, in order to expand the amount of information which can be represented on a label according to the prior art, it is essential to increase the abovementioned parameters *m* and/or *n*, for example by increasing the surface area of the label or by increasing the reading/writing resolution thereof, i.e. by reducing the size of the dots and the distance between them, something which may involve an extremely high cost from a technological point of view.

At present the application of Data Matrix codes on objects may be performed in different ways, namely directly on the product or on special supports depending on the type of material and surface in question. The techniques which are mainly used are as follows:
- ink printing;
- mechanical marking with a punch;
- laser marking;
- deposition techniques.

In the specific sector of metallic materials, the technique which is most widely used is that of marking or etching.

In this case a major difficulty is associated with the fact that, owing to the high reflectivity of metallic materials, it is difficult to read the codes, the possibility of reading depending greatly on the illumination of the object.

Moreover, in the case of small metal objects, for example gold and silverware or jewellery articles, sufficiently large areas are not always available for being able to apply a Data Matrix code containing all the necessary information and, even if it were possible to achieve this, by increasing sufficiently the resolution of the etching and reading devices, the latter would be too costly.

A further problem also arises from the fact that the etching devices must be wear-resistant and at the same time compact so as to be able to perform etching with a high degree of resolution, which requirements conflict with each other.

### Summary of the invention

One object of the present invention is to introduce a method for associating information with encoded symbols of the bar code or Data Matrix type, by means of which, for the same resolution and size of the label or support used, it is possible to increase the amount of information contained therein, overcoming the abovementioned problems. A further object of the present invention is to provide a method for transferring said encoded symbols onto physical supports, in particular onto supports of the metallic type.

### Brief description of the drawings

Fig. 1 shows an example of a coded label of the Data Matrix type provided according to the prior art;
Fig. 2 shows an example of a coded label according to the method of the present invention and produced using a method for performing impression on a metal support also according to the present invention.

### Detailed description of the invention

The present invention achieves the objects discussed above by providing a method for encoding and decoding information in the form of symbols, characterized by a first step where information is converted into numerical form and by a following step involving encoding in a bar code or Data Matrix format where the information contained therein is associated not only with the position of dots or the position and thickness of lines, but also with the colour or the shade of grey of each dot or line, so that the information contained therein is increased exponentially and with an exponent proportional to the intensity of colour or to the number of shades of grey used.

Another object of the present invention is to introduce an encoded symbology which, for the same surface area and resolution, contains a quantity of information greater than that possible with the prior art. Therefore, by means of the present invention it is possible to provide encoded symbols which are formed by sequences of dots and/or lines, represent information contained therein and are characterized by the fact that said dots or lines are coloured or shown in shades of grey.

A further object of the present invention is to introduce a method which is such that the degree of resolution is no longer dependent on the requirements for robustness so that it is possible to increase said degree of resolution without increasing correspondingly the costs, exploiting the physical and chemical behaviour of the metals, the coatings and the metal substrates when they are subject to intense and localized changes in temperature.

In a preferred embodiment, the method for producing encoded symbols impressed on supports made of metallic material according to the present invention comprises the use of laser technology and is characterized in that colouring of the surface layer is performed by means of a thermal effect.

A further object of the present invention is to provide a method for producing said coded labels, as described more fully in the claims which form an integral part of the present description.

Further objects and advantages of the present invention will emerge clearly from the detailed description which follows of an example of embodiment thereof and its variations as well as from the accompanying drawings provided purely by way of a non-limiting example and from the claims which form an integral part of the description.

The method for encoding and decoding information in the form of symbols according to the present invention comprises the use of further colours in addition to black on a white background or vice versa; for example, shades of grey may be used to represent the dots of the Data Matrix codes. Hence, using, for example, a colour intensity *p* of 8 bits it is possible to obtain 256 colours, so that a Data Matrix code comprising a matrix of *m* x *n* dots may represent as many as 256^(*m* x *n*) digits, equivalent to 2^[*p**(*m* x *n*)] encoding levels. Therefore, in other words, using different colours to represent the dots, instead of only black on a white background (or vice versa), the resolution of the matrix is increased, virtually, in a manner which is exponentially proportional to the intensity of the colour expressed in bits. Vice versa, with this method it is possible, for the same amount of information, to reduce the surface area of the label by a factor p.

It should be pointed out that this method may also be applied to so-called bar code symbology, thus being able to represent 2^[p x m] digits compared to the present 2^m.

The encoded symbols obtained using the method described above are therefore characterized in that they are formed by dots or lines shown in colours - or shades of grey - and may be formed on different types of medium, for example paper, fabric, plastic, wood and metal.

Moreover, the known techniques of etching and marking and the various methods offered by the known printing techniques, such as, for example, silkscreen printing, offset printing and offset silkscreen printing, may also be advantageously used.

In particular, a preferred method of producing encoded symbols according to the present invention comprises the use of laser technology for colouring the metal on which said symbols must be impressed by means of heat treatment. The metal undergoes heating owing to the energy received from the laser and consequently changes colour owing to phenomena of a varying nature: reactions with the gases present in the atmosphere which cause thermal oxidisation, local allotropic transformation phenomena, atom migration or changes in crystal structure or composition.

The metal thus treated assumes colours belonging to specific colour tables depending on the physical and chemical properties of the metal itself.

The metals which may be used with the method according to the present invention may also be in the form of metal coatings or generic substrates, for example metal on metal or metal on plastic.

With reference to the accompanying Fig. 2, this shows an example of a coded Data Matrix label obtained according to the method of the present invention applied to the surface of a thin plate made of 18-carat gold alloy. In a preferred embodiment of the present invention it is envisaged using a CCD technology scanner for detecting the shades of grey. Suitable methods for processing the signal acquired will then be able to perform the successive code identification, reading and decoding operations.

The advantages resulting from application of the present invention are clear. Namely, it is possible, for the same resolution, to expand significantly the information contained in coded labels or, for the same information contained therein, it is possible to achieve a reduction by said factor p in the surface area of the said label. Finally, it is clear that, owing to the substantial reduction in the size of the label, the problems of focussing on surfaces which are reflective, not flat or not uniformly illuminated, are minimized.

## Claims

1. Method for encoding information, comprising the following steps:
a) Translating the information into numeric form;
b) encoding said numerical translation according to the previous step in the form of a matrix with m x n dots, such as to represent 2^(*m* x *n)* levels, or in the form of a bar code with *k* lines, such as to represent 2^*k* levels;
c) transferring said matrix of *m* x *n* dots or said bar code with k lines onto a special physical support,
**characterized in that** said dots and lines are represented by a colouring corresponding to a table of p colours, said colouring being associated with further information contained therein, so as to represent overall up to 2^[*p**(*m* x *n*)] levels in the case of matrices with *m* x *n* dots or up to 2^[*p*k*] levels in the case of bar codes with *k* lines.

2. Method according to Claim 1, **characterized in that** the said table of p colours comprises *p* shades of grey.

3. Method according to Claims 1 and 2, **characterized in that** said encoding in the form of a matrix with *m* x *n* dots consists in Data Matrix encoding.

4. Method according to Claims 1 to 3, **characterized in that** said transfer of said matrix with *m* x *n* dots or said bar code with *k* lines on a special physical support comprises a step involving colouring of a metal support by means of a heat treatment.

5. Method according to Claim 4, **characterized in that** said heat treatment is performed by means of laser technology.

6. Method according to Claims 1 to 3, **characterized in that** said transfer of said matrix with *m* x *n* dots or said bar code with *k* lines onto a special physical support comprises a printing step.

7. Method according to Claim 6, **characterized in that** said printing is performed by means of silkscreen printing, offset printing or offset silkscreen printing.

8. Method according to Claims 1 to 3, **characterized in that** said transfer of said matrix with *m* x *n* dots or said bar code with *k* lines onto a special support comprises a step involving mechanical marking with a punch or laser marking.

9. Method according to Claims 1 to 3, **characterized in that** said transfer of said matrix with *m* x *n* dots or said bar code with *k* lines on a special support comprises a deposition step.

10. Coded label comprising a matrix with *m* x *n* dots or a bar code with *k* lines, **characterized in that** said dots and said lines are represented with a colouring corresponding to a table of *p* colours or shades of grey so that the information contained in said dots and said lines depends both on the position and on the colour thereof.

11. Coded label according to Claim 10, **characterized in that** it is produced by means of techniques chosen from the group comprising: heat treatment performed by means of laser technology, silkscreen printing, offset printing, offset silkscreen printing, mechanical marking with a punch, laser marking and deposition.
